# EUROPEAN PATENT APPLICATION

(11) **EP 0 789 358 A1**
(43) Date of publication of application: **13.08.1997**
(21) Application number: 96302511.9
(22) Date of filing: 10.04.1996
(51) Int. Cl.: G11B 15/60

(54) **Guide roller for magnetic tape**

(30) Priority: 23.01.1996 JP 9593/96
(71) Applicant: FUJI PARTS CO., LTD., Ota-ku, Tokyo (JP)
(72) Inventor: Kamano, Kenya, Yokohama-shi, Kanagawa-ken (JP)
(74) Representative: Carter, Gerald

(57) **Abstract**

Endless annular silencing grooves 3 and 4 having a predetermined depth and width are formed in a guide roller A' from each end portion of the guide roller A' such that the silencing grooves 3 and 4 extend parallel to and coaxially with an axial bore 5 of the guide roller A', in order to provide a guide roller for a magnetic tape capable of suppressing a resonant noise which guide rollers generate when wind-backward or fast-forward-feed is performed on a magnetic recording/playing apparatus.

## Description

### BACKGROUND OF THE INVENTION

The present invention relates to a guide roller for a magnetic tape used in a magnetic recording/playing apparatus such as a VTR or a tape recorder.

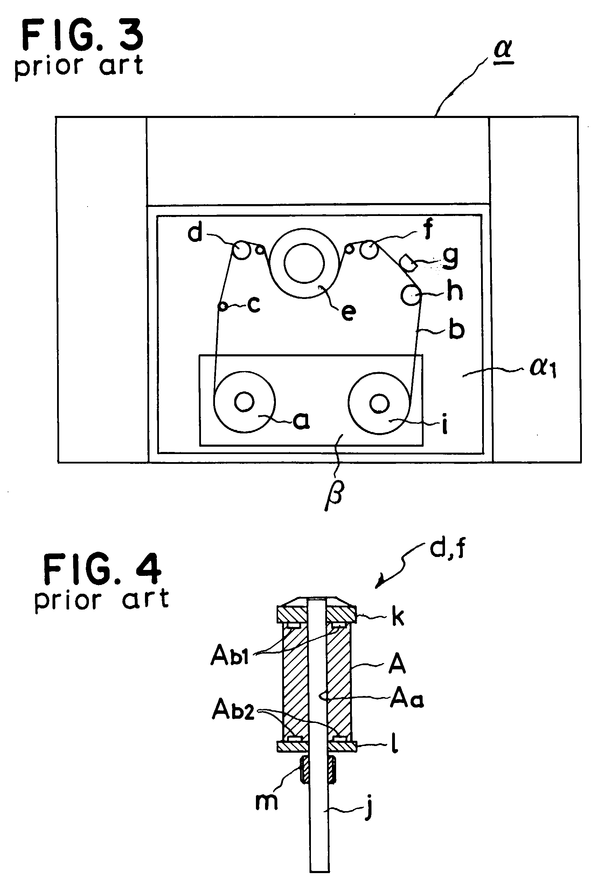

FIG. 3 shows a plan view of a mechanical deck α of a magnetic recording/playing apparatus with a video tape cassette β loaded.

When a recording is played back, a video tape fed from a left reel a of a video tape cassette β runs along a pinch roller c, a left tape roller guide d, a cylinder head e, a right tape roller guide f, a head g, and a pinch roller h and then is taken up on a right reel i.

Each of the right and left roller guides d and f has a structure in which a roller spindle j is inserted into an axial bore Aa formed in a guide roller A; a head flange k and a base flange l are fitted to the top end and intermediate portion of the roller spindle j, respectively, such that the guide roller A is slidable on the roller spindle j; and a threaded tube m is also fitted to the intermediate portion of the roller spindle j.

In FIG. 4, reference numerals Ab1 and Ab2 denote annular gate grooves for injection use.

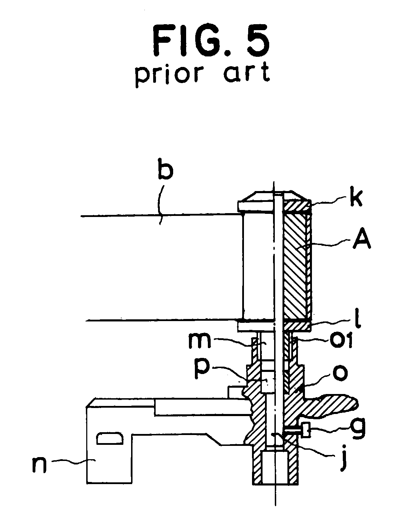

As shown in FIG. 5, a lock post o is integrally formed of a synthetic resin with a support arm n fixed to a mechanical deck plate α 1. A threaded hole portion o1 is formed at the upper end portion of the lock post o, and a piece ring p is fitted into the lock post o. The roller spindle j of each of the right and left tape roller guides d and f is inserted into the threaded hole o1 and the piece ring p while the threaded tube m is screwed into the threaded hole portion o1 such that each of the taper roller guides d and f is positioned at a predetermined height. A lock screw q is tightened so as to fixedly hold the roller spindle j.

When the video tape b is wound backward or fed fast forward for head search, the cylinder head e rotates at a speed of 4,000 to 5,000 rpm in a conventional apparatus. At present, to further reduce a waiting time, the cylinder head e rotates at a higher speed of 7,000 to 10,000 rpm.

When the video tape b is run at high speeds for wind-backward or fast-forward-feed, a noise generated by the right and left guide rollers A rotating at high speeds, a frictional noise generated by friction between the tape b and the roller A, a rotational vibration noise, and other noises resonate, generating a loud noise such as "beeee....", "gyurrrr...." or "zeeee....". Such noises are significant and irritating, particularly at the final stage of wind-backward or fast-forward-feed. Thus, solution of the noise problem is called for.

### SUMMARY OF THE INVENTION

In view of the foregoing, major objects of the present invention are as follows.

A first object of the present invention is to provide a guide roller for a magnetic tape capable of suppressing a resonant noise which guide rollers generate when wind-backward or fast-forward-feed is performed on a magnetic recording/playing apparatus.

A second object of the present invention is to provide a guide roller for a magnetic tape whose structure itself has a silencing function.

A third object of the present invention is to provide a guide roller for a magnetic tape in which a silencing groove is formed.

Other objects of the present invention will be more apparent from the specification and drawings and particularly from the scope of claims.

To achieve the above objects, the present invention employs the following novel features.

According to a first aspect of the present invention, there is provided a guide roller for a magnetic tape, wherein an endless annular silencing groove having a predetermined depth and width is formed in the guide roller from each end portion of the guide roller such that the silencing groove extends parallel to and coaxially with an axial bore of the guide roller.

According to a second aspect of the present invention, in the guide roller for a magnetic tape according to the first aspect of the present invention, the depth of each of the silencing grooves is about 0.08 to 0.49 times the axial length of the guide roller.

According to a third aspect of the present invention, in the guide roller for a magnetic tape according to the first or second aspect of the present invention, the width of each of the silencing grooves is about 0.09 to 0.49 times the radius of the guide roller.

According to a fourth aspect of the present invention, in the guide roller for a magnetic tape according to the first, second or third aspect of the present invention, each of the silencing grooves is a tubular groove having an inner diameter and an outer diameter which are coaxial and constant.

According to a fifth aspect of the present invention, in the guide roller for a magnetic tape according to the first, second, third or fourth aspect of the present invention, each of the silencing grooves extends to an annular gate recess.

According to a sixth aspect of the present invention, in the guide roller for a magnetic tape according to the second, third, fourth or fifth aspect of the present invention, the depth of each of the silencing grooves is about 1 to 5.5 mm, preferably 4 mm.

According to a seventh aspect of the present invention, in the guide roller for a magnetic tape according to the second, third, fourth, fifth or sixth aspect of the present invention, the width of each of the silencing grooves is about 0.3 to 1.7 mm, preferably 0.75 mm.

According to an eighth aspect of the present invention, in the guide roller for a magnetic tape according to the first, second, third, fourth, fifth, sixth or seventh aspect of the present invention, the guide roller is of nonmagnetic material.

According to a ninth aspect of the present invention, in the guide roller for a magnetic tape according to the eighth aspect of the present invention, the nonmagnetic material is an engineering plastic such as polyacetal.

### DESCRIPTION OF THE DRAWINGS

While the specification concludes with claims particularly pointing out and distinctly claiming the subject matter of the present invention, it is believed the invention will be better understood from the following description taken in connection with the accompanying drawings in which:
FIG. 1 is a plan view of an embodiment of the present invention,
FIG. 2 is a central cross-sectional view along line II-II of FIG. 1,
FIG. 3 is a plan view of a mechanical deck with a video tape cassette loaded,
FIG. 4 is a central cross-sectional view of a conventional roller guide, and
FIG. 5 is partially cross-sectioned enlarged view of the roller guide of FIG. 4 mounted.

### DETAILED DESCRIPTION OF THE EXEMPLARY EMBODIMENT

An embodiment of the present invention will now be described with reference to the drawings.

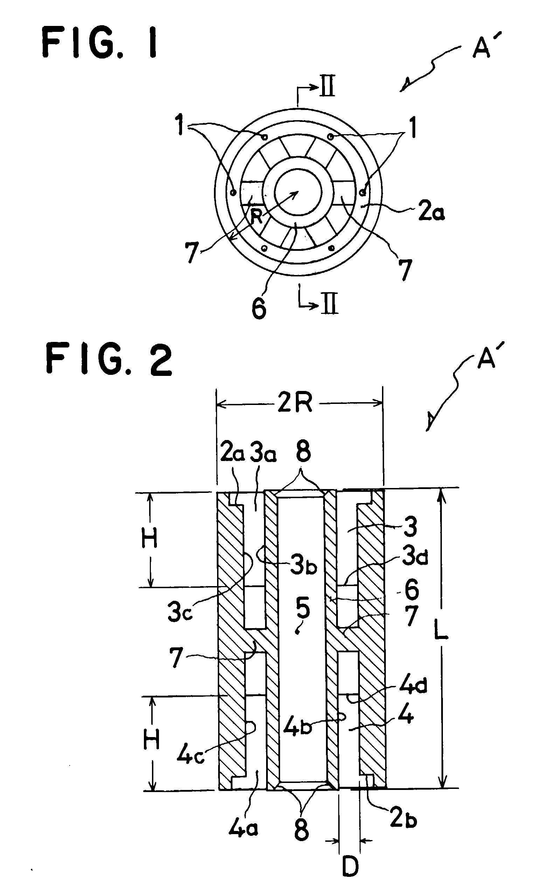

FIG. 1 shows a plan view of the present embodiment. FIG. 2 is a central cross-sectional view along line II-II of FIG. 1.

In FIGS. 1 and 2, symbol A' denotes a guide roller of the present embodiment, reference numeral 1 denotes gates for injection, reference numerals 2a and 2b denote annular gate recesses, reference numerals 3 and 4 denote silencing grooves, reference numerals 3a and 4a denote openings, reference numerals 3b and 4b denote inner circumferential surfaces, reference numerals 3c and 4c denote outer circumferential surfaces, reference numerals 3d and 4d denote groove bottoms, reference numeral 5 denotes an axial bore, reference numeral 6 denotes a bearing portion, reference numeral 7 denotes radial ribs, and reference numeral 8 denotes chamfers.

The guide roller A' is formed of an engineering plastic, such as polyacetal, as a nonmagnetic material. An engineering plastic is injected into a mold at positions of the gates 1 for injection, thereby integrally forming the guide roller A'. The thus formed guide roller A' undergoes precision machining of its inner and outer surfaces.

The silencing grooves 3 and 4 are formed parallel to and coaxially with the axial bore 5 such that they surround the axial bore 5 and extend to the annular gate recesses 2a and 2b, respectively, ending up with the openings 3a and 4a, respectively. The silencing grooves 3 and 4 extend vertically and tubularly maintaining respective widths constant. This structure provides a quick damping function which damps a resonant noise generated at wind-backward or fast-forward-feed in the silencing grooves 3 and 4 and causes the resonant noise to regularly and repeatedly reflect (vibrate) on the inner and outer circumferential surfaces 3b and 4b, and 3c and 4c, respectively and which further prevents the noise being damped from being released from inside the silencing grooves 3 and 4. The reason for employing this structure is that if the inner and outer circumferential surfaces 3b and 4b, and 3c and 4c, respectively, have deformed or curved shapes, a resonant noise reflects irregularly, causing beats to be generated or noise to leak out with a resultant degradation in damping effect.

Our experiments about the noise damping function of the silencing grooves 3 and 4 revealed an effective range of the ratio of depth H to axial length L and of the ratio of width D to radius R as below.

It was also confirmed from the experiments that disposing the silencing grooves 3 and 4 at the upper and lower half portions of the guide roller A' symmetrically in the vertical direction for attaining rotational balance is also effective for damping resonant noise vibration.
Axial length L of roller = 12.57 ± 0.03 mm
Roller diameter 2R = 7 ± 0.05 mm
Depth H of silencing grooves 3 and 4 ≒ 1 to 5.5 mm
Width D of silencing grooves 3 and 4 ≒ 0.3 to 1.7 mm
   Then
H/L ≒ 0.08 to 0.49
D/R ≒ 0.09 to 0.49

The experiments revealed that if the ratio is smaller than a minimum value of the above range, the action of damping a resonant noise is not produced and that if the ratio is greater than a maximum value of the above range, resonance is rather accelerated.

Specific dimensions of a concrete example of the present invention are given below.
Axial length L of roller A' = 12.57 mm
Diameter 2R of roller A' = 7 mm
Depth H of silencing grooves 3 and 4 = 4 mm
Width D of silencing grooves 3 and 4 = 0.75 mm
Depth of annular gate recesses 2a and 2b = 0.6 mm
Outer diameter of annular gate recesses 2a and 2b = 6 mm
Diameter of axial bore = 2 mm
Thickness of radial rib 7 = 1 mm
Radius of inner circumferential surfaces 3b and 4b of silencing grooves 3 and 4 = 1.5 mm
Radius of outer circumferential surfaces 3c and 4c of silencing grooves 3 and 4 = 2.25 mm

Under the above dimensional conditions, a resonant noise generated at wind-backward and fast-forward-feed was completely damped.

The present invention provides the following effects. When a magnetic tape is wound backward or fed fast forward, an irritating resonance noise which was conventionally the case can be damped, and also a waiting time can be shortened. Further, silencing grooves allow the release of heat generated by friction between a guide roller and its roller spindle and between the guide roller and a magnetic tape while the guide roller is rotating at high speeds.

## Claims

1. A guide roller for a magnetic tape, wherein an endless annular silencing groove having a predetermined depth and width is formed in said guide roller from each end portion of said guide roller such that the silencing groove extends parallel to and coaxially with an axial bore of said guide roller.

2. A guide roller for a magnetic tape according to Claim 1, wherein the depth of the silencing groove is about 0.08 to 0.49 times the axial length of said guide roller.

3. A guide roller for a magnetic tape according to Claim 1 or 2, wherein the width of the silencing groove is about 0.09 to 0.49 times the radius of said guide roller.

4. A guide roller for a magnetic tape according to Claim 1, 2 or 3, wherein the silencing groove is a tubular groove having an inner diameter and an outer diameter which are coaxial and constant.

5. A guide roller for a magnetic tape according to Claim 1, 2, 3 or 4, wherein the silencing groove extends to an annular gate recess.

6. A guide roller for a magnetic tape according to Claim 2, 3, 4 or 5, wherein the depth of the silencing groove is about 1 to 5.5 mm, preferably 4 mm.

7. A guide roller for a magnetic tape according to Claim 2, 3, 4, 5 or 6, wherein the width of the silencing groove is about 0.3 to 1.7 mm, preferably 0.75 mm.

8. A guide roller for a magnetic tape according to Claim 1, 2, 3, 4, 5, 6 or 7, wherein said guide roller is of nonmagnetic material.

9. A guide roller for a magnetic tape according to Claim 8, wherein the nonmagnetic material is an engineering plastic such as polyacetal.
